# EUROPEAN PATENT APPLICATION

(11) **EP 4 613 724 A1**
(43) Date of publication of application: **10.09.2025**
(21) Application number: 25159538.5
(22) Date of filing: 22.02.2025
(51) Int. Cl.: C04B 35/573

(54) **COMPOSITE MATERIAL**

(30) Priority: 05.03.2024 JP 2024033200
(71) Applicant: TOTO LTD., Kokurakita-ku Kitakyushu-shi, Fukuoka 802-8601 (JP)
(72) Inventor: Ishitsuka, Yuji, Kitakyushu-shi, 802-8601 (JP); Tsuboi, Fumio, Kitakyushu-shi, 802-8601 (JP); Fujinaga, Kosaku, Kitakyushu-shi, 802-8601 (JP); Tanaka, Takahiro, Kitakyushu-shi, 802-8601 (JP); Kanari, Kazuyuki, Kitakyushu-shi, 802-8601 (JP)
(74) Representative: Bandpay & Greuter

(57) **Abstract**

A cut surface SA of a composite material 10 containing silicon and silicon carbide, when cut along a plane, has: a plurality of first regions S1, which are cross sections of silicon carbide particles with a particle size of 20 µm or more; and a second region S2 including cross sections of silicon and cross sections of silicon carbide, which is the entire region of the cut surface SA, excluding the first regions S1. The proportion that the first regions S1 account for is 70% or more in the cut surface SA.

## Description

### Field

The present invention relates to a composite material containing silicon and silicon carbide. Background

Composite materials containing silicon and silicon carbide, also called "SiSiC", etc., are known as materials having high corrosion resistance, heat resistance, etc. As described in Japanese Patent Laid-Open No. 2001-348288, the above composite materials can be obtained by, for example, subjecting a formed body composed of carbon and silicon carbide in the form of powder to reaction sintering while impregnating it with molten silicon.

The composite materials described above have high stiffness while being relatively lightweight, and also have high thermal conductivity. Therefore, they are expected to be applied in a variety of fields, including semiconductor manufacturing devices, etc.

### Summary

As shown in the figure and others in the Japanese Patent Laid-Open No. 2001-348288 described above, when a composite material containing silicon and silicon carbide is cut, a cut surface shows cross sections of a plurality of silicon carbide particles and cross sections of silicon arranged in the form of a matrix to fill the space between each of the silicon carbide particles.

It is known that the smaller the particle size of each silicon carbide particle, the higher the strength (for example, three-point bending strength) of the composite material. Therefore, in conventional composite materials, the particle size of silicon carbide particles has been required to be as small as possible. However, as the particle size of silicon carbide particles is reduced, the strength of the composite material increases as described above, while posing the problem that the thermal conductivity of the composite material decreases.

The present invention has been made in view of such a problem, and an object of the present invention is to provide a composite material having sufficient strength and thermal conductivity.

The composite material according to the present invention is a composite material containing silicon and silicon carbide. A cut surface of the composite material, when cut along a plane, has: a plurality of first regions, which are cross sections of silicon carbide particles with a particle size of 20 µm or more; and a second region including cross sections of silicon and cross sections of silicon carbide, which is the entire region of the cut surface, excluding the first regions. Also, the proportion that the first regions account for is 70% or more in the cut surface described above.

The first regions are cross sections of silicon carbide particles that are relatively large, with a particle size of 20 µm or more. Such first regions can be said to be the portions that contribute to the thermal conductivity of the composite material, since there are no grain boundaries inside that cause thermal resistance.

Also, the second region is the portion that includes both cross sections of relatively small silicon carbide, which is not included in the first regions described above, and cross sections of silicon. Such a second region can be said to be the portion that contributes to the strength of the composite material, since the absence of large particles makes it difficult for cracks to progress.

In the composite material with the configuration described above, the proportion that the first regions contributing to thermal conductivity account for is 70% or more in the cut surface. This ensures sufficient thermal conductivity of the composite material. Also, the portion of the cut surface described above other than the first regions is the second region contributing to the strength. The presence of the second region prevents the strength of the composite material from decreasing too much. In this manner, in the composite material with the configuration described above, the proportion that the first regions account for is 70% or more in the cut surface and the portion other than the first regions is the second region, thereby ensuring both thermal conductivity and strength in the composite material.

According to the present invention, there can be provided a composite material having sufficient strength and thermal conductivity.

### Brief Description of the Drawings

FIG. 1 shows a cross section of the composite material according to the present embodiment;
FIG. 2A shows a cross section of the composite material according to the present embodiment;
FIG. 2B shows a cross section of the composite material according to the present embodiment; and
FIG. 3 shows the evaluation results and other data of composite materials.

### Detailed Description

The present embodiment will be described below with reference to the accompanying drawings. For the sake of ease of understanding the description, identical constituent elements in each drawing will be marked with identical symbols as much as possible, and duplicate description will be omitted.

A composite material 10 according to the present embodiment is a solid material containing silicon and silicon carbide, and is also referred to as so-called "SiSiC" or the like. The composite material 10 is used as, for example, a material for components constituting semiconductor manufacturing devices, but its specific application, final shape, and other details are not particularly limited.

As will be described later, the composite material 10 is obtained by subjecting a formed body composed of carbon and silicon carbide in the form of powder to reaction sintering while impregnating it with molten silicon. In this respect, it is similar to conventional SiSiC. However, the composite material 10 according to the present embodiment differs from conventional SiSiC in the shape and distribution of each region that appears on the cut surface when the composite material is cut.

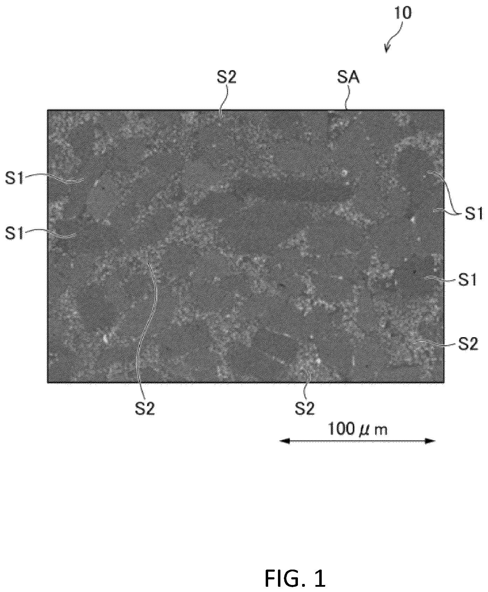

The image shown in FIG. 1 is obtained by observing a cut surface SA, which appears when the composite material 10 is cut along a plane, with a scanning electron microscope (SEM). The range of the cut surface SA is 500 µm × 350 µm, and the magnification of enlargement is 500 times. The black regions in the image of FIG. 1 are confirmed to be cross sections of silicon carbide (SiC), and the white regions are confirmed to be cross sections of silicon (Si).

The black regions in the image of FIG. 1, that is, the cross sections of silicon carbide, include a plurality of regions that are cross sections of relatively large silicon carbide particles with a particle size of 20 µm or more. Such regions will also be referred to as "first regions S1" below. Also, the entire region of the cut surface SA, excluding the first regions S1 described above, will also be referred to as "second region S2" below. Note that the "particle size" here refers to the diameter of the smallest virtual circle that can enclose a single silicon carbide particle that appears in the cut surface SA.

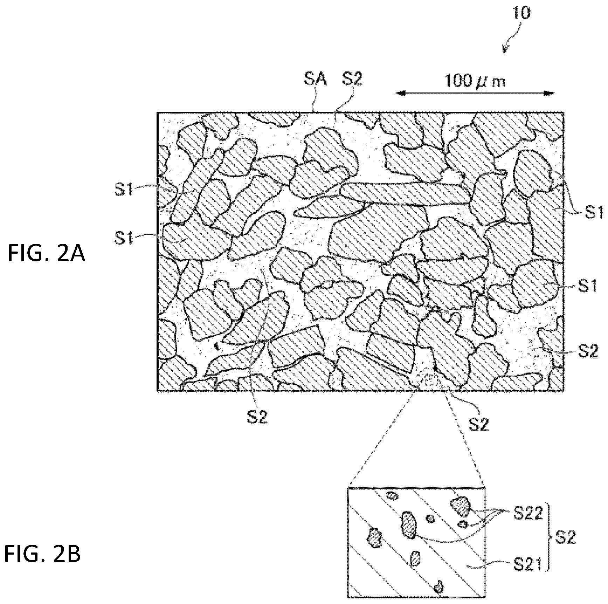

In FIG. 2A, for the same cut surface SA as that shown in FIG. 1, the plurality of first regions S1 included in the cut surface SA are schematically depicted as regions with hatching. Also, in the region of FIG. 2A excluding the first regions S1 (that is, the second region S2), the cross sections of silicon carbide are depicted as white and the cross sections of silicon as black by applying binarization processing to the image of FIG. 1.

FIG. 2B is a schematic redrawing of a portion of FIG. 2A in an enlarged form. In the second region S2, the cross sections of silicon carbide, which are white in FIG. 2A, are depicted as "S21" in FIG. 2B. Also, in the second region S2, the cross sections of silicon, which are black in FIG. 2A, are depicted as "S22" in FIG. 2B. In this manner, the second region S2, which is the entire region of the cut surface SA, excluding the first regions S1, includes cross sections of silicon (S22) and cross sections of silicon carbide (S21).

The second region S2 may include only the cross sections of silicon carbide (S21) and the cross sections of silicon (S22), but may further include cross sections composed of materials other than these. Examples of such cross sections include cross sections of carbon particles, which are one of the raw materials at the time of forming.

In the present embodiment, the proportion that the first regions S1 account for is 73% in the cut surface SA. Also, in the present embodiment, the proportion that the sum total of the cross sections of silicon (S22) accounts for is 1% in the cut surface SA. In the present embodiment, the proportion that the cross sections of silicon carbide (S21) account for is 96% in the second region S2.

As shown in FIG. 2B, at least some of the cross sections of silicon (S22) included in the second region S2 are surrounded from the outside and all around by a cross section of silicon carbide (S21). Also, at least in the range shown in FIG. 2B in the second region S2, the cross section of silicon carbide (S21) is observed to be a single continuous cross section without intervening grain boundaries. That is, in the image obtained by observation at a magnification of 500 times or less as in FIG. 1, the presence of grain boundaries that divide the cross section of silicon carbide (S21) shown in FIG. 2B into a plurality of pieces is not confirmed.

As will be described later, in the present embodiment, granulated powder with a higher sphericity and improved flowability compared to conventional materials is used as a raw material at the time of producing the composite material 10. It is considered that the silicon carbide and carbon, etc. in the raw materials are more evenly dispersed compared to conventional ones, resulting in grain growth of silicon carbide and the formation of a continuous cross section of silicon carbide (S21), as shown in FIG. 2B.

The cross section of silicon carbide (S21) that surrounds the cross section of silicon (S22) from the outside and all around is a single continuous region without intervening grain boundaries as described above, but it does not need to be a single continuous region in the entire cut surface SA shown in FIG. 1. For example, the configuration may be such that there is a plurality of continuous cross sections of silicon carbide (S21) without intervening grain boundaries in the cut surface SA shown in FIG. 1, and these plurality of cross sections of silicon carbide (S21) are adjacent to each other via grain boundaries. In this case, it is sufficient if there is a cross section of silicon (S22) surrounded inside and all around by at least one cross section of silicon carbide (S21).

Note that it is sufficient that the cross section of silicon carbide (S21) is observed as a "single continuous region without intervening grain boundaries" only when it is observed with a scanning electron microscope at a magnification of 500 times or less. When the cross section of silicon carbide (S21) that surrounds the cross section of silicon (S22) from the outside is observed in detail at a magnification of more than 500 times, grain boundaries or equivalent boundaries that divide the cross section (S21) may be observed.

As described above, the composite material 10 according to the present embodiment has, in the cut surface SA when cut along a plane: the plurality of first regions S1, which are cross sections of silicon carbide particles with a particle size of 20 µm or more; and the second region S2 including cross sections of silicon (S22) and cross sections of silicon carbide (S21), which is the entire region of the cut surface SA, excluding the first regions S1. Also, the proportion that the first regions S1 account for is 73% in the cut surface SA. The proportion that the sum total of the cross sections of silicon (S22) accounts for is 1% in the cut surface SA.

The reason for adopting such a configuration will be described. In general, it is known that for composite materials containing silicon and silicon carbide, the smaller the particle size of each silicon carbide particle that appears on the cut surface, the higher the strength (for example, three-point bending strength) of the composite material. Therefore, in conventional composite materials, the particle size of silicon carbide particles has been required to be as small as possible. However, as the particle size of silicon carbide particles is reduced, the strength of the composite material increases as described above, while posing the problem that the thermal conductivity of the composite material decreases.

Therefore, in the composite material 10 according to the present embodiment, achievement of both thermal conductivity and strength is attempted by adjusting the particle size, etc. of silicon carbide that appears in the cut surface SA.

As previously described, the first regions S1 are cross sections of silicon carbide particles that are relatively large, with a particle size of 20 µm or more. Such first regions can be said to be the portions that contribute to the thermal conductivity of the composite material 10, since there are no grain boundaries inside that cause thermal resistance.

Also, the second region S2 is the portion that includes both cross sections of relatively small silicon carbide (S21), which is not included in the first regions S1 described above, and cross sections of silicon (S22). Such a second region S2 can be said to be the portion that contributes to the strength of the composite material 10, since the absence of large particles makes it difficult for cracks to progress.

In the composite material 10 according to the present embodiment, the proportion that the first regions S1 contributing to thermal conductivity accounts for is 73% in the cut surface SA, as described above, which is a relatively large proportion. This ensures sufficient thermal conductivity of the composite material 10. Also, the portion of the cut surface SA other than the first regions S1 is the second region S2 contributing to the strength. Due to the presence of the second region S2, the strength of the composite material 10 can also be sufficiently ensured.

The proportion that the sum total of the cross sections of silicon (S22) accounts for is 1% in the cut surface SA of FIG. 1, FIG. 2A, and FIG. 2B, as previously described, which is a very small proportion. Also, in the present embodiment, as a result of the reduced proportion of silicon, the proportion that the cross sections of silicon carbide (S21) account for is 96% in the second region S2, which is a very large proportion.

In the present embodiment, the strength of the composite material 10 is further enhanced by keeping the proportion that silicon accounts for in the entire cut surface SA small, while still having a configuration in which both silicon carbide and silicon are present in the second region S2.

As is generally known, silicon has lower strength compared to silicon carbide. In the composite material 10, the proportion of the cross sections of silicon (S22), which is the portion with low strength, is reduced, and local "overscraping" at the time of machining is suppressed, thereby enabling more precise machining than in the past.

Also, the cross section of silicon carbide (S21) that surrounds the cross section of silicon (S22) is not a collection of a plurality of particles, but a single continuous region without intervening grain boundaries. Due to the continuous presence of silicon carbide, which has relatively high strength, the local "overscraping" at the time of machining is further suppressed. The effect can also be obtained that particles are less likely to drop out at the time of machining.

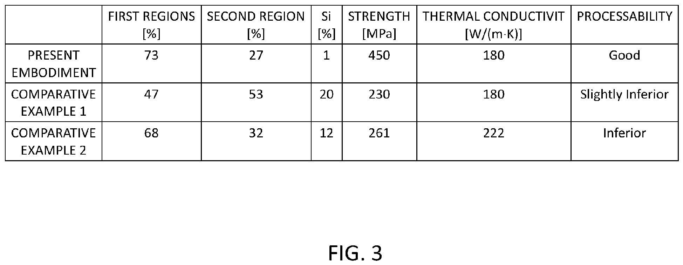

FIG. 3 shows the results of experiments comparing the composite material 10 according to the present embodiment with composite materials according to two Comparative Examples prepared separately from it.

The "FIRST REGIONS [%]" in the table of FIG. 3 is the proportion that the first regions S1 account for in the cut surface SA of each sample, expressed in the unit of percentage. The "SECOND REGION [%]" is the proportion that the second region S2 accounts for in the cut surface SA of each sample, expressed in the unit of percentage. The definitions of "first regions S1" and "second region S2" are the same as those previously described.

The "STRENGTH [MPa]" in the table of FIG. 3 is the result obtained by performing a three-point bending strength test on each sample, expressed in the unit of "MPa". The test method used was the method specified in the Japanese Industrial Standards (JIS) R1601:2008.

The "THERMAL CONDUCTIVITY [W/(m.K)]" in the table of FIG. 3 is the result obtained by measuring the thermal conductivity of each sample by the laser flash method, expressed in the unit of "W/(m.K)".

The "PROCESSABILITY" in the table of FIG. 3 is the result obtained by grinding the cut surface of each sample under the same conditions and then observing the degree of smoothness of the surface after the machining. If the Sq (root mean square height) of the surface after the machining was less than 10 nm, it was scored as "good"; if the Sq was 10 nm or more and less than 50 nm, it was scored as "slightly inferior"; and if the Sq was 50 nm or more, it was scored as "inferior".

In both samples of Comparative Examples 1 and 2, the proportion that the first regions S1 account for in the cut surface SA is smaller compared to that of the present embodiment, and the proportion is less than 70% in both cases. Also, the proportion that the cross sections of silicon (S22) account for in the cut surface SA is larger compared to that of the present embodiment, and the proportion is more than 10% in both cases.

As shown in FIG. 3, it was confirmed that the composite material 10 according to the present embodiment has significantly higher strength compared to Comparative Examples 1 and 2, while ensuring approximately the same level of thermal conductivity as each of the Comparative Examples 1 and 2.

In addition, the processability of Comparative Examples 1 and 2 are "inferior" and "slightly inferior", respectively, due to larger Sq after the machining. In contrast, the processability of the present embodiment was "good", which is good, due to the fact that the proportion that the cross sections of silicon (S22) account for is as small as 1%. That is, the average machining depth was kept smaller compared to Comparative Examples 1 and 2, confirming that the material is easier to machine precisely.

Apart from the present embodiment shown in FIG. 1, etc., the present inventors have prepared several types of composite materials 10 with different production conditions, and have measured each of the parameters shown in the table of FIG. 3 for each of the samples. According to the measurements, the finding has been obtained that if the proportion that the first regions S1 account for is 70 or more in the cut surface SA of the composite material 10, and the remaining portion is the second region S2 containing silicon and silicon carbide, the composite material 10 can ensure both sufficient thermal conductivity and sufficient strength, which are necessary for a constituent material of semiconductor manufacturing devices, etc. It was also confirmed that if the proportion that the sum total of the cross sections of silicon (S22) accounts for is 10% or less, more preferably 5% or less, in the cut surface SA, the strength of the composite material 10 is even higher and the processability is also significantly better. Furthermore, it was also confirmed that setting the proportion that the cross sections of silicon carbide (S21) account for to at least 70% or more in the second region S2 is preferable from the viewpoints of strength, processability, and other factors.

Assuming that the particle size of silicon carbide particles appearing in the cut surface SA is generally uniform, the relationship between the particle size of silicon carbide particles and the fracture strength of the composite material can be calculated by using the Griffith's equations or Knudsen's equations, for example. Similarly, the relationship between the particle size of silicon carbide particles and the thermal conductivity of the composite material can also be calculated theoretically.

For example, under the assumption that the particle size of silicon carbide particles is generally uniform, if the particle size is increased to the extent that the thermal conductivity of the composite material is 180 W/ (m·K), similar to the present embodiment, the fracture strength is calculated to be about 307 MPa. In contrast, the fracture strength of the composite material 10 according to the present embodiment is 450 MPa, which is significantly larger than 307 MPa, as shown in FIG. 3.

The reason why the composite material 10 according to the present embodiment was able to achieve sufficiently large fracture strength while ensuring the same level of thermal conductivity as Comparative Examples is thought to be the effects of the proportion that the first regions S1 account for being as large as 70 or more in the cut surface SA, the proportion that the sum total of the cross sections of silicon (S22) account for being as small as 10% or less, and other factors.

The method for producing the composite material 10 will be described. Hereinafter, the description of the known points of the SiSiC production method will be simplified or omitted as appropriate.

At first, raw materials, carbon powder and silicon carbide powder, are weighed in predetermined amounts and dispersed and mixed in pure water together with a binder and a dispersing agent to prepare a slurry. The silicon carbide powder described above is such powder that the average particle size is 20 µm or more. Such powder may contain silicon carbide powder with a particle size of 5 µm or less. The silicon carbide powder with a particle size of 20 µm or more serves as the silicon carbide of the first regions S1**.** The carbon powder described above is such powder that the average particle size is 20 µm or less, may be 5 µm or less.

Thereafter, while spray-drying the obtained slurry using a spray dryer, granulated powder (granules) containing carbon and silicon carbide is created. At this time, the sphericity of the resulting granulated powder can be increased by selecting a binder or a dispersing agent as appropriate. The target sphericity value is preferably set to a higher value compared to the sphericity of granulated powder used for conventional SiSiC materials.

The purpose of increasing the sphericity of the granulated powder is to allow the granulated powder to have sufficient flowability. The flowability of the granulated powder may be increased to a degree that would have been considered excessive in the past. Note that the flowability of the granulated powder varies depending not only on the sphericity of the granulated powder, but also on the size of the granulated powder. For this reason, it is preferable to control the size of the granulated powder by adjusting the flow rate of air to be supplied when spray-drying the slurry, for example, to obtain granulated powder with optimal flowability.

At this point, the obtained granulated powder contains granules with a variety of sizes. These granules are classified into first granulated powder containing only granules with a diameter of 100 to 200 µm and second granulated powder containing only granules with a diameter of 30 to 70 µm. Subsequently, the first granulated powder and the second granulated powder are mixed at predetermined ratios. At this time, the amount of the first granulated powder compounded is set to 60 to 80% by weight. In other words, the amount of the second granulated powder compounded is set to 20 to 40% by weight. It is preferable to mix the whole well such that the first granulated powder and the second granulated powder are sufficiently dispersed.

Thereafter, the granulated powder that has been mixed as described above is placed in a predetermined mold to obtain a formed body by dry uniaxial press forming. By increasing the flowability of the granulated powder in advance as described above, the granulated powder is packed sufficiently densely in the mold. As a result, a porosity of the formed body can be reduced.

Also, by setting the mixing ratio between the first granulated powder and the second granulated powder to the ratio described above, the second granulated powder enters the gaps between the densely arranged first granulated powder, and the granulated powder is easily packed closely throughout the entire inside of the mold. As a result, the porosity of the formed body is further reduced.

Note that the forming method employed may be different from the dry uniaxial pressing as described above, as long as the method is capable of packing the granulated powder with high flowability sufficiently densely. For example, the forming may be performed by using CIP (cold isostatic pressing), or by using a 3D printer to create the shape while laying down the powder.

After the forming is completed, metal silicon is mounted on the obtained formed body, which is then calcined under reduced pressure. The formed body is impregnated with molten silicon, and reaction sintering with the carbon powder is performed. The silicon carbide produced by the reaction sintering becomes part of the silicon carbide (S21) of the second region S2. By the process described above, the composite material 10 shown in FIG. 1, etc. can be obtained.

In the present embodiment, as described above, the flowability of the granulated powder is made higher than in the past, and the formed body is obtained while packing the powder sufficiently densely in the mold. As a result, it is thought that the reaction between the silicon and carbon powder takes place more uniformly throughout the entire second region S2, resulting in formation of a single continuous cross section of silicon carbide (S21) over a relatively broad range, as previously described.

The present embodiment has been described above with reference to specific examples. However, the present disclosure is not limited to these specific examples. These specific examples, with appropriate design changes made by those skilled in the art, are also encompassed within the scope of the present disclosure as long as they have the characteristics of the present disclosure. The elements provided by each of the aforementioned specific examples, as well as their arrangement, conditions, shape, etc., are not limited to those exemplified, but can be changed as appropriate. The elements provided by each of the aforementioned specific examples can be combined as appropriate, as long as there is no technical inconsistency.

## Claims

1. A composite material (10) comprising silicon and silicon carbide,
wherein a cut surface (SA) of the composite material (10), when cut along a plane, has:
a plurality of first regions (S1), which are cross sections of silicon carbide particles with a particle size of 20 µm or more; and
a second region (S2) including cross sections of silicon (S22) and cross sections of silicon carbide (S21), which is an entire region of the cut surface, excluding the first regions (S1), and
a proportion that the first regions (S1) account for is 70% or more in the cut surface (SA).

2. The composite material (10) according to claim 1**,** wherein a proportion that a sum total of the cross sections of silicon (S22) accounts for is 10% or less in the cut surface (SA).

3. The composite material (10) according to claim 1 or 2,
wherein, in at least part of the second region (S2),
a single continuous cross section of silicon carbide (S21), without intervening grain boundaries, surrounds an outside of a single cross section of silicon (S22) all around.

4. The composite material (10) according to any one of claims 1 to 3, wherein a proportion that the cross sections of silicon carbide (S21) account for is 70% or more in the second region (S2).
